# EUROPÄISCHE PATENTSCHRIFT

(11) **EP 1 781 510 B1**
(45) Veröffentlichungstag und Bekanntmachung des Hinweises auf die Patenterteilung: **28.05.2008**
(21) Anmeldenummer: 05778093.4
(22) Anmeldetag: 10.08.2005
(51) Int. Cl.: B60R 21/276

(54) **AIRBAGMODUL**
AIRBAG MODULE
MODULE D'AIRBAG

(30) Priorität: 24.08.2004 DE 102004041802
(43) Veröffentlichungstag der Anmeldung: 09.05.2007
(73) Patentinhaber: TAKATA - PETRI AG, 63743 Aschaffenburg (DE)
(72) Erfinder: LEIFHEIT, Markus, 86485 Biberbach/Affalten (DE); EINSIEDEL, Heinrich, 89077 Ulm (DE); FRANK, Richard, 89275 Elchingen (DE); KARLBAUER, Ulrich, 89079 Ulm (DE)
(74) Vertreter: Baumgärtel, Gunnar
(86) Internationale Anmeldenummer: PCT/DE2005/001433
(87) Internationale Veröffentlichungsnummer: WO 2006/021189

(56) Entgegenhaltungen:
- EP-A- 0 800 960
- EP-A- 0 807 557
- WO-A-00/69690
- WO-A-03/070527
- DE-U1- 20 303 115
- US-A- 4 275 901
- US-A- 5 718 447

## Beschreibung

Die Erfindung bezieht sich auf ein Airbagmodul mit den Merkmalen gemäß dem Oberbegriff des Anspruchs 1.

Ein derartiges Airbagmodul ist beispielsweise aus der WO 03070527 A bekannt. Dieses vorbekannte Airbagmodul weist einen Gasgenerator auf, der mittels einer Gasleiteinrichtung mit einem Gassack verbunden ist. Die Gasleitereinrichtung ist durch eine Gaslanze gebildet. Die Gaslanze weist eine Vielzahl an Abströmöffnungen auf, durch die das aus dem Gasgenerator strömende Gas in den Gassack des Airbagmoduls geleitet wird. Der Gasgenerator des vorbekannten Airbagmoduls, der also eine Teilkomponente des Airbagmoduls bildet, ist im nichtverbauten Zustand, also vor dem Verbinden mit der Gasleiteinrichtung, für sich schubneutral. Dies bedeutet, dass bei einem Gasaustritt aus dem Gasgenerator die Rückstosskraft des austretenden Gases keine resultierende, den Gasgenerator bewegende Antriebskraft auf den Gasgenerator ausüben kann, weil nämlich die Gasaustrittslöcher des Gasgenerators derart angeordnet sind, dass sich die Rückstoßkräfte in ihrer Summe aufheben. Konkret sind die Gasaustrittslöcher des Gasgenerators zu diesem Zweck gegenüberliegend angeordnet.

Der Erfindung liegt die Aufgabe zu Grunde, ein Airbagmodul anzugeben, das Unfälle bei der Handhabung eines Airbagmoduls noch besser als bisher verhindert. Insbesondere soll im Falle eines äußeren Erhitzens des Airbagmoduls, beispielsweise in einem Brandfall, keine oder zumindest nur eine möglichst geringe Gefährdung von dem Airbagmodul ausgehen.

Diese Aufgabe wird ausgehend von einem Airbagmodul der eingangs angegebenen Art erfindungsgemäß durch die kennzeichnenden Merkmale des Anspruchs 1 gelöst. Vorteilhafte Ausgestaltungen des erfindungsgemäßen Airbagmoduls sind in Unteransprüchen angegeben.

Danach ist erfindungsgemäß vorgesehen, dass das Airbagmodul derart ausgestaltet ist, das es sich im Falle eines durch äußeres Erhitzen, insbesondere in einem Brandfall, verursachten, unerwünschten Auslösens des Gasgenerators schubneutral, zumindest näherungsweise schubneutral verhält.

Ein wesentlicher Vorteil des erfindungsgemäßen Airbagmoduls besteht darin, dass dieses im Falle eines unerwünschten Auslösens des -Gasgenerators durch äußeres Erhitzen keine Schubwirkung generieren kann und sich somit nicht wie ein "gefährliches Wurfstück" unkontrolliert und damit menschengefährdend bewegen bzw. durch "die Gegend fliegen" kann. Dies wird erfindungsgemäß dadurch erreicht, dass sich das Airbagmodul - im Falle eines durch thermische Einwirkung unerwünscht bedingten Auslösens des Gasgenerators - als "Gesamtheit" schubneutral verhält. Im Unterschied beispielsweise zu dem eingangs beschriebenen vorbekannten Airbagmodul, bei dem zwar ein schubneutraler Gasgenerator verwendet, aber insgesamt kein schubneutrales Gesamtmodul realisiert wird, verhält sich das erfindungsgemäße Airbagmodul insgesamt schubneutral, sofern es zu einem thermisch bedingten Auslösens des Gasgenerators kommt.

Besonders einfach und damit vorteilhaft lässt sich das schubneutrale Verhalten des Airbagmoduls erreichen, wenn die Gasleiteinrichtung thermisch derart instabil ist, dass beim äußeren Erhitzen, insbesondere im Brandfall, ein schubfrei wirkendes Ableiten des Gasstromes aus dem Gasgenerator bewirkt wird. Beispielsweise kann die Gasleiteinrichtung beim äußeren Erhitzen abschnittsweise oder vollständig aufschmelzen, so dass das Gas aus dem vorzugsweise schubneutralen Gasgenerator unmittelbar entweichen kann.

Alternativ kann die Gasleiteinrichtung zumindest eine zusätzliche Gasaustrittöffnung aufweisen, die im Normalbetrieb verschlossen ist und die erst beim äußeren Erhitzen insbesondere im Brandfall, aufschmilzt und das Gas des Gasgenerators zusätzlich ausdringen lässt.

Vorzugsweise weist diese zumindest eine zusätzliche Gasaustrittsöffnung eine Gasausströmrichtung auf, die zu der Gasausströmrichtung der zumindest einen "normalen" Abströmöffnung der Gasleiteinrichtung entgegengesetzt ist. Damit ist sichergestellt, dass bei einem Aufschmelz-en der zusätzlichen Gasaustrittsöffnung ein zusätzlicher Gasstrom ermöglicht wird, dessen Schubwirkung zu der durch die "normale" Abströmöffnung der Gasleiteinrichtung bewirkten Schubwirkung entgegengesetzt ist und deren Wirkung somit reduziert oder im Idealfall aufhebt. Vorzugsweise ist der Querschnitt der zumindest einen zusätzlichen Gasaustrittsöffnung derart dimensioniert, dass die gewünschte "Gegen-Schubwirkung" erzielt wird.

Gemäß einer weiteren vorteilhaften Ausgestaltung des Airbagmoduls ist vorgesehen, dass die Gasleiteinrichtung zumindest zwei zusätzliche Gasaustrittsöffnungen aufweist die im Normalbetrieb verschlossen sind und die erst beim äußeren Erhitzen, insbesondere im Brandfall, aufschmelzen und das Gas des Gasgenerators zusätzlich ausdringen lassen. Die beiden zusätzlichen Gasaustrittsöffnungen weisen dabei entgegengesetzte Gasausströmrichtungen auf, damit sich die durch jede der beiden Gasaustrittsöffnungen bewirkte zusätzliche Schubwirkung aufhebt. Diese schubneutrale Anordnung der zwei zusätzlichen Gasaustrittsöffnungen lässt sich beispielsweise erreichen, in dem diese räumlich gegenüberliegend angeordnet werden.

Vorzugsweise leiten die erwähnten zwei zusätzlichen Gasaustrittsöffnungen einen wesentlichen Teil des Gasstromes des Gasgenerators ab, damit sichergestellt ist, dass die "normalen" Abströmöffnungen der Gasleiteinrichtung keine gefährliche Restschubwirkung bewirken können. Vorzugsweise leiten die zumindest zwei zusätzlichen Gasaustrittsöffnungen mindestens 50% des Gasstromes, vorzugsweise sogar 90 % des Gasstromes ab. Die gewünschte Ableitwirkung lässt sich durch die Größe der zusätzlichen Gasaustrittsöffnungen einstellen; je größer die zusätzlichen Gasaustrittsöffnungen sind, desto geringer ist der Einfluss der "normalen" Abströmöffnungen und damit deren Restschubwirkung.

Gemäß einer weiteren vorteilhaften Ausgestaltung des Airbagmoduls ist vorgesehen, dass ein Verbindungselement der Gasleiteinrichtung den Gasgenerator mit der Gasleiteinrichtung verbindet. Dieses Verbindungselement ist vorzugsweise thermisch derart instabil, dass es bei einem äußeren Erhitzen, insbesondere im Brandfall, die Strömungsverbindung zwischen dem Gasgenerator und der Gasleiteinrichtung unterbricht und damit das den Gasgenerator verlassende Gas unmittelbar nach außen abführt. Das Verbindungselement kann bei dem genannten äußeren Erhitzen beispielsweise ganz oder teilweise aufschmelzen.

Vorzugsweise ist der Gasgenerator für sich allein ebenfalls schubneutral ausgestaltet,so dass bei einem Abtrennen des Gasgenerators von der Gasleiteinrichtung dieser ebenfalls keine Restschubwirkung entfalten kann.

Als besonders bevorzugt wird es angesehen, wenn der Gasgenerator zwei oder mehr radialsymmetrisch angeordnete - beispielsweise zwei gegenüberliegende - Abströmöffnungen aufweist, von denen eine mit der Gasleiteinrichtung durch das Verbindungselement verbunden ist und von denen die andere durch das Verbindungselement verschlossen wird. Im Falle eines äußeren Erhitzens des Verbindungselementes wird dieses aufschmelzen, so dass beide Abströmöffnungen des Gasgenerators freigelegt werden und das Gas des Gasgenerators schubwirkungsfrei den Gasgenerator verlassen kann.

Airbagmodule mit zusätzlichen Gasaustrittsöffnungen, die im Brandfalle aufschmelzen, sind für sich beispielsweise in den beiden US-Patenschriften 5,683,102 und 5,738,372 beschrieben; diese Airbagmodule sind jedoch nicht schubneutral.

Die Gasleiteinrichtung und/oder das Verbindungselement können beispielsweise einen Schlauch umfassen, der thermisch derart instabil ist, dass er beim äußeren Erhitzen, insbesondere im Brandfall, ganz oder teilweise aufschmilzt und ein schubfrei wirkendes Ableiten des Gasstromes aus dem Gasgenerator bewirkt. Der Schlauch kann beispielsweise durch eine Schelle gehalten werden.

Eine besonders einfache Montage des Schlauches lässt sich erreichen, wenn der Schlauch durch einen Schrumpfschlauch gebildet ist. Unter dem Begriff "Schrumpfschlauch" sind dabei Schläuche zu verstehen, die im Falle eines Erwärmens ihren Schlauchdurchmesser verringern und somit auf Rohre oder dergleichen zur Befestigung "aufgeschrumpft" werden können.

Der Schrumpfschlauch wird vorzugsweise auf zumindest eine zusätzliche Gasaustrittsöffnung der Gasleiteinrichtung aufgeschrumpft, so dass er diese verschließt; bei einem äußeren Erhitzen, insbesondere im Brandfall, schmilzt der Schlauch auf, so dass das Gas des Gasgenerators durch die zusätzliche Gasaustrittsöffnung ausströmen kann.

Bildet der Schrumpfschlauch das Verbindungselement oder einen Teil davon, so wird der Schrumpfschlauch vorzugsweise zumindest auf einem Abschnitt der Gaslanze der Gasleiteinrichtung und/oder auf einem Abschnitt des Gasgenerators aufgeschrumpft.

Vorzugsweise weist der Schlauch bzw. der Schrumpfschlauch eine Wanddicke von 2 bis 5 mm auf, um für den vom Gasgenerator ausgeübten Gasdruck eine ausreichende Gegenkraft aufbringen zu können; jedoch können im Einzelfall auch andere Wanddicken geeignet sein. Der Schrumpfschlauch kann beispielsweise aus vernetztem Polyolefin bestehen.

Der Begriff "Gasleiteinrichtung" ist im Übrigen ganz allgemein zu verstehen: Gasleiteinrichtungen können beispielsweise lange oder kurze Rohre, Gaslanzen jeglicher Art, Diffusoren jeglicher Art, Rohre mit angeflanschten Diffusoren jeglicher Art oder andere Arten von Gasleitungen umfassen oder durch solche Komponenten gebildet sein.

Die Erfindung wird nachfolgend anhand von Ausführungsbeispielen erläutert; dabei zeigen
- Fig. 1 bis 3: ein erstes Ausführungsbeispiel für ein erfindungsgemäßes Airbagmodul,
- Fig. 4 und 5: ein zweites Ausführungsbeispiel für ein erfindungsgemäßes Airbagmodul,
- Fig. 6 und 7: ein drittes Ausführungsbeispiel für ein erfindungsgemäßes Airbagmodul,
- Fig. 8 bis 10: ein viertes Ausführungsbeispiel für ein erfindungsgemäßes Airbagmodul,
- Fig. 11 und 12: ein fünftes Ausführungsbeispiel für ein erfindungsgemäßes Airbagmodul,
- Fig. 13 und 14: ein sechstes Ausführungsbeispiel für ein erfindungsgemäßes Airbagmodul und
- Fig. 15 und 16: Ausführungsbeispiele für ein erfindungsgemäßes Airbagmodul mit einem Schrumpfschlauch.

In den Figuren werden für identische oder vergleichbare Elemente dieselben Bezugszeichen verwendet.

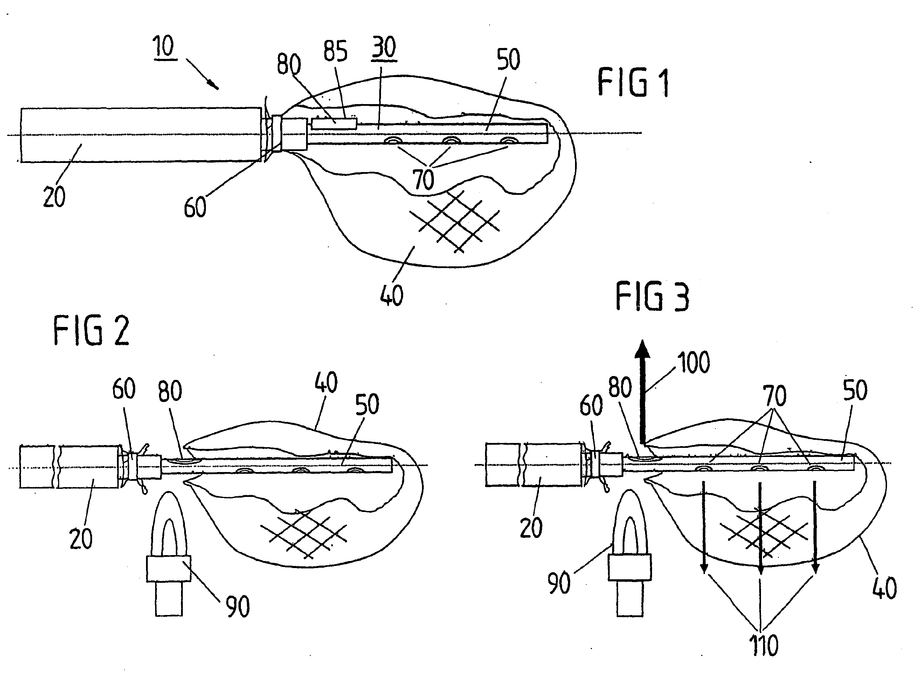

In der Fig. 1 erkennt man ein Airbagmodul 10 mit einem Gasgenerator 20, der übereine Gasleiteinrichtung 30 mit einem Gassack 40 verbunden ist. Die Gasleiteinrichtung 30 weist eine Gaslanze 50 und Verbindungselement 60 auf, das die Gaslanze 50 mit dem Gasgenerator 20 sowie mit dem Gassack 40 verbindet.

Wie sich in der Fig. 1 erkennen lässt, weist die Gaslanze 50 eine Vielzahl von Abströmöffnungen 70 auf, durch die das aus dem Gasgenerator 20 ausströmende Gas in den Gassack 40 geleitet wird.

Außerdem ist in der Fig. 1 eine zusätzliche Gasaustrittsöffnung 80 erkennbar, die durch ein aufschmelzbares Verschlusselement 85 jedoch zunächst verschlossen ist. Durch diese zusätzliche Gasaustrittsöffnung 80 kann somit zunächst kein Gas austreten.

Kommt es nun zu einem äußeren Erhitzen des Airbagmoduls 10, beispielsweise in einem Brandfall, - dies ist in der Fig. 2 durch eine Flamme 90 symbolisiert -, so wird sich die zusätzliche Gasaustrittsöffnung 80 öffnen, da das Verschlusselement 85 thermisch instabil ist und schmilzt. Somit kann auch durch diese zusätzliche Gasaustrittsöffnung 80 Gas des Gasgenerators 20 austreten.

Wie sich in der Fig. 2 erkennen lässt, wird bei dem Ausführungsbeispiel gemäß den Fig. 1 bis 3 davon ausgegangen, dass der Gassack 40 bei entsprechender thermischer Einwirkung aufschmilzt, so dass die zusätzliche Gasaustrittsöffnung 80 freigelegt wird und ein unmittelbares Ausströmen des aus dem Gasgenerator 20 heraustretenden Gases durch die zusätzliche Gasaustrittsöffnung 80 ermöglicht wird.

In der Fig. 3 ist die Gasausströmrichtung des aus der zusätzlichen Gasaustrittsöffnung 80 austretenden Gases mit dem Bezugszeichen 100 gekennzeichnet. Die Gasausströmrichtungen des aus den "normalen" Abströmöffnungen 70 aus der Gaslanze 50 austretenden Gases sind mit den Bezugszeichen 110 gekennzeichnet.

Es lässt sich in der Fig. 3 erkennen, dass die Gasausströmrichtung 100 des aus der zusätzlichen Gasaustrittsöffnung 80 austretenden Gases entgegengesetzt zu den Gasausströmrichtungen 110 der Abströmöffnungen 70 verläuft. Das Gesamtverhalten des Airbagmoduls 10 ist somit "schubneutral", da die Schubwirkung des aus der zusätzlichen Gasaustrittsöffnung 80 austretenden Gases ungefähr genau so groß ist wie die Schubwirkung des aus den Abströmöffnungen 70 austretenden Gases. Hierzu ist der Querschnitt der zusätzlichen Gasaustrittsöffnung 80 derart bemessen, dass der Gasstrom aus der zusätzlichen Gasaustrittsöffnung 80 ungefähr dem Gasstrom entspricht, der aus den Abströmöffnungen 70 abfließt.

Bei dem Ausführungsbeispiel gemäß den Figuren 1 bis 3 ist es im Übrigen unerheblich, ob der Gasgenerator 20 für sich allein schubneutral ist oder nicht, da nämlich die Schubneutralität des Airbagmoduls 10 allein durch die zusätzliche Gasaustrittsöffnung 80 gewährleistet wird.

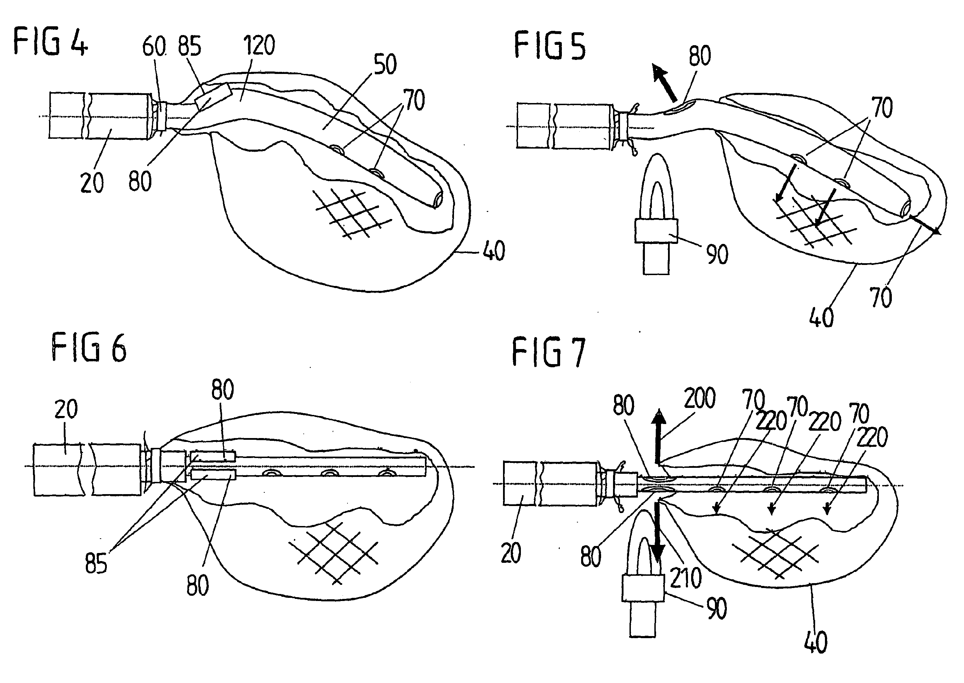

In den Fig. 4 und 5 ist ein zweites Ausführungsbeispiel für ein erfindungsgemäßes Airbagmodul gezeigt. Im Unterschied zu dem Ausführungsbeispiel gemäß den Fig. 1 bis 3 ist bei diesem zweiten Ausführungsbeispiel die Gaslanze 50 nicht geradlinig ausgeführt, sondern gekrümmt. Um dennoch zu erreichen, dass sich das Airbagmodul 10 im Falle eines Brandfalles näherungsweise schubneutral verhält, ist die zunächst mit einem aufschmelzbaren Verschlusselement 85 verschlossene, zusätzliche Gasaustrittsöffnung 80 in einem Krümmungsbereich 120 der Gaslanze 50 derart angebracht, dass trotz des ungeradlinigen Gaslanzenverlaufs der Gaslanze 50 die Schubwirkung des aus der zusätzlichen Gasaustrittsöffnung 80 austretenden Gases ungefähr die Schubwirkung des aus den Abströmöffnungen 70 austretenden Gases "neutralisiert".

In den Fig. 6 und 7 ist ein drittes Ausführungsbeispiel für ein erfindungsgemäßes Airbagmodul gezeigt. Man erkennt, dass an der Gaslanze 50 zwei zusätzliche Gasaustrittsöffnungen 80 und 80' angeordnet sind, die einander räumlich gegenüberliegen und die derart bemessen sind, dass der größte Teil des aus dem Gasgenerator 20 austretenden Gases durch diese beide zusätzlichen Gasaustrittsöffnungen 80 heraustritt, sobald in einem Brandfalle die aufschmelzbaren Verschlusselemente 85 aufschmelzen und die beiden Gasaustrittsöffnungen 80 und 80' freigeben.

Da die beiden zusätzlichen Gasaustrittsöffnungen 80 bzw. 80' einander gegenüberliegen, wird die Schubwirkung des die beiden Gasaustrittsöffnungen verlassenden Gases neutralisiert, so dass näherungsweise ein schubneutrales bzw. schubfreies Airbagmodul gebildet wird.

Bei dem Ausführungsbeispiel gemäß den Figuren 6 und 7 ist es somit unerheblich, ob der Gasgenerator 20 für sich allein schubneutral ist oder nicht, da nämlich die Schubneutralität des Airbagmoduls 10 allein durch die zusätzlichen Gasaustrittsöffnungen 80 und 80' gewährleistet wird.

In der Fig. 7 ist durch Pfeile 200, 210 sowie 220 schematisch dargestellt, dass der Gasfluss durch die beiden zusätzlichen Gasaustrittsöffnungen 80 und 80' deutlich größer als der Gasfluss durch die Abströmöffnungen 70 ist, so dass diese letztgenannten keine wesentliche Restschubwirkung hervorrufen können.

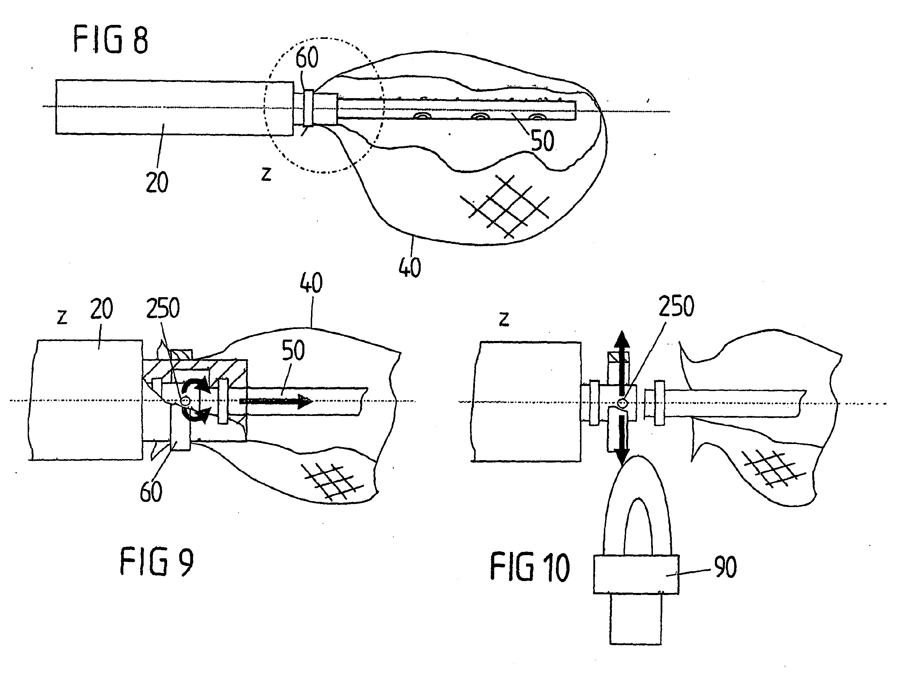

Im Zusammenhang mit den Fig. 8 bis 10 wird nun ein viertes Ausführungsbeispiel für ein erfindungsgemäßes Airbagmodul erläutert. Man erkennt insbesondere in der Fig. 9 den inneren Aufbau des Verbindungselements 60 im Detail. Das Verbindungselement 60 ist hierbei thermisch instabil ausgestaltet, so dass es bei einem Erwärmen im Brandfall aufschmilzt und zwei gegenüberliegende Abströmöffnungen 250 des Gasgenerators 20 freigibt. Das aus dem Gasgenerator 20 ausströmende Gas wird somit unmittelbar aus den Abströmöffnungen 250 des Gasgenerators 20 ausströmen und nicht in die Gasleiteinrichtung 30 gelangen können. Da der Gasgenerator 20 schubneutral ausgestaltet ist, wird damit im Brandfall gewährleistet, dass sich auch das gesamte Airbagmodul 10 schubneutral verhält.

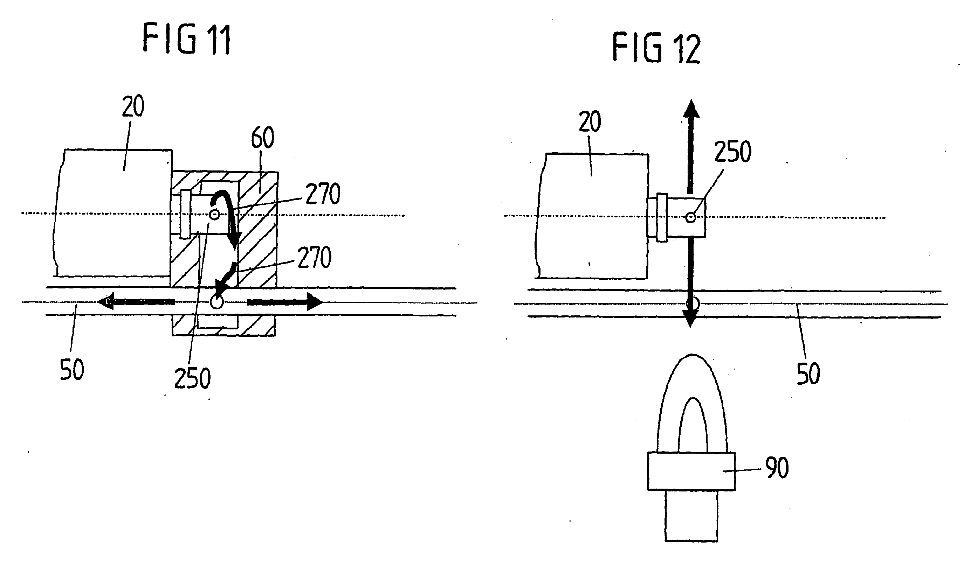

In den Fig. 11 und 12 ist ein fünftes Ausführungsbeispiel für ein erfindungsgemäßes Airbagmodul gezeigt. Bei diesem Airbagmodul ist ebenfalls ein thermisch instabiles Verbindungselement 60 vorhanden, das im Brandfalle aufschmilzt und ein unmittelbares Austreten des aus dem Gasgenerator 20 kommenden Gases durch die Abströmöffnungen 250 des Gasgenerators 20 ermöglicht. Dadurch, dass der Gasgenerator 20 - wie bereits erwähnt - schubneutral ausgestaltet ist, wird im Brandfall eine Schubneutralität des gesamten Airbagmoduls 10 gewährleistet.

Pfeile 270 deuten den Gasfluss durch das Verbindungselement 60 im Normalbetrieb an, also bevor das Verbindungselement 60 aufgeschmolzen ist.

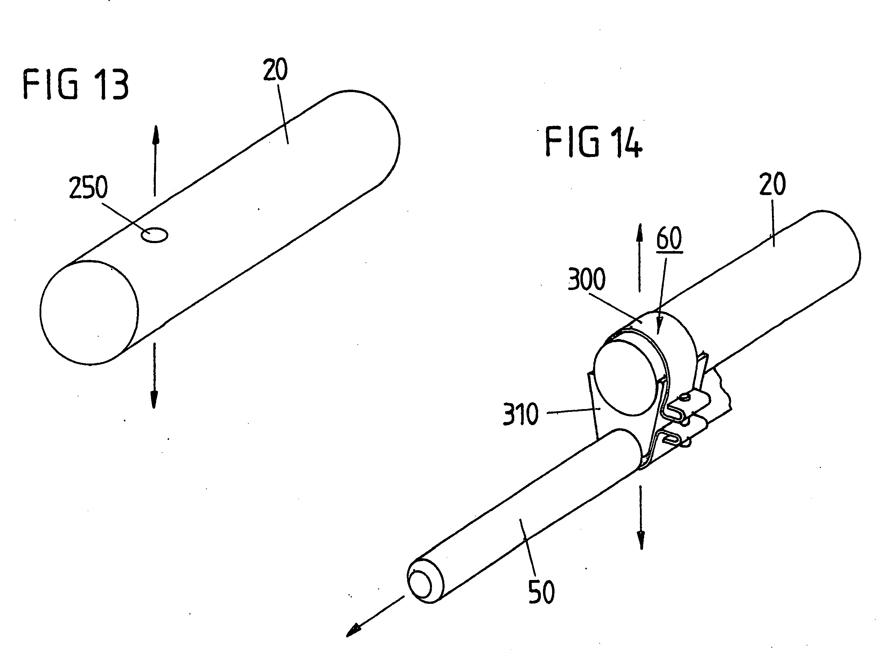

Im Zusammenhang mit den Fig. 13 und 14 wird nachfolgend ein sechstes Ausführungsbeispiel für ein erfindungsgemäßes Airbagmodul erläutert. Man erkennt in der Fig. 13 einen schubneutralen Gasgenerator 20 mit seinen beiden gegenüberliegenden Abströmöffnungen 250.

In der Fig. 14 sind der Gasgenerator 20 sowie die Gaslanze 50 im Detail gezeigt. Man erkennt, dass das Verbindungselement 60 durch ein thermisch stabiles oder thermisch instabiles Spannband 300 und ein thermisch instabiles Verbindungsglied 310 gebildet ist. Das Spannband 300 deckt dabei eines der beiden Abströmöffnungen 250 des Gasgenerators ab und drückt die gegenüberliegende Abströmöffnung derart gegen das Verbindungsglied 310, dass das Gas des Gasgenerators 20 durch einen nicht weiter gezeigten Gaskanal im Verbindungsglied 310 in die Gaslanze 50 geleitet wird.

Das thermisch nicht stabile Verbindungsglied 310 wird im Brandfalle aufschmelzen, so dass die feste Verbindung zwischen dem Gasgenerator 20 und der Gaslanze 50 aufgelöst wird. Hierdurch werden die beiden gegenüberliegenden Abströmöffnungen 250 des Gasgenerators 20 freigelegt, so dass das Gas unmittelbar aus dem schubneutralen Gasgenerator 20 austreten kann.

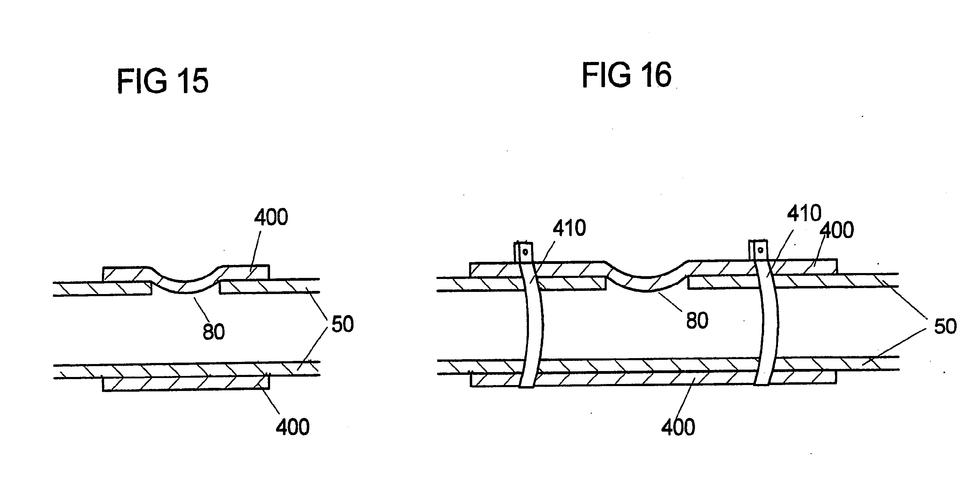

Bei den aufschmelzbaren Verschlusselementen 85 gemäß den Figuren 1 bis 7 kann es sich beispielsweise um einen Schlauch, beispielsweise um einen Schrumpfschlauch, handeln. Geeignete Schrumpfschläuche werden beispielsweise von der Firma DSG-Canusa unter dem Produktnamen "CFW" vertrieben. Ein entsprechendes Ausführungsbeispiel ist in der Figur 15 gezeigt.

Man erkennt in der Figur 15 im Querschnitt einen Schrumpfschlauch 400 der auf einer zusätzlichen Abströmöffnung 80 einer Gaslanze, eines Diffusors oder eines Rohres mit angeflanschtem Diffusor oder dergleichen - vgl. Bezugszeichen 50 - aufgeschrumpft ist und diese im Normalbetrieb verschließt. Im Brandfalle schmilzt der Schrumpfschlauch 400 auf und gibt die zusätzliche Abströmöffnung 80 frei, so dass ein schubneutrales Verhalten des Airbagmoduls 10 bewirkt wird.

Zusätzlich kann der Schrumpfschlauch 400 auch durch Schellen 410 gehalten werden; ein entsprechendes Ausführungsbeispiel zeigt die Figur 16.

Alternativ ist es ebenfalls möglich, das Verschlusselement 85 durch einen normalen Schlauch zu bilden, der keine Schrumpfeigenschaften aufweist. Ein solcher Schlauch kann beispielsweise - wie in der Figur 16 am Beispiel eines Schrumpfschlauches gezeigt wurde - durch Schellen 410 gehalten werden.

Auch ein in den Figuren 15 und 16 nicht dargestelltes Verbindungselement zwischen dem Gasgenerator 20 und der Gaslanze, dem Diffusor oder dem Rohr mit angeflanschtem Diffusor - vgl. Bezugszeichen 50 - kann im Übrigen durch einen Schlauch, beispielsweise einen Schrumpfschlauch, gebildet sein. Bezüglich der Funktionsweise eines solchen "aufschmelzbaren Verbindungselements" sei auf die Ausführungsbeispiele gemäß den Figuren 8 bis 14 verwiesen.

### Bezugszeichenliste

- 10: Airbagmodul
- 20: Gasgenerator
- 30: Gasleiteinrichtung
- 40: Gassack
- 50: Gaslanze
- 60: Verbindungselement
- 70: Abströmöffnung
- 80,80': Zusätzliche Gasaustrittsöffnung
- 85: Aufschmelzbares Verschlusselement
- 100: Gasströmrichtung
- 110: Gasströmrichtung
- 200, 210, 220: Gasströme
- 250: Abströmöffnungen des Gasgenerators
- 270: Pfeile
- 300: Spannband
- 310: Thermisch instabiles Verbindungsglied
- 400: Schrumpfschlauch
- 410: Schellen

## Patentansprüche

1. Airbagmodul (10) mit einem Gasgenerator (20), einem Gassack (40) und einer den Gassack (40) und den Gasgenerator (20) verbindenden Gasleiteinrichtung (30), wobei die Gasleiteinrichtung (30) zumindest eine Abströmöffnung (70) aufweist, durch die das Gas des Gasgenerators (20) in den Gassack (40) geleitet wird, wobei das Airbagmodul (10) derart ausgestaltet ist, dass es sich im Falle eines durch äußeres Erhitzen, insbesondere in einem Brandfall, unerwünschten Auslösens des Gasgenerators (20) schubneutral, zumindest näherungsweise schubneutral verhält,
**dadurch gekennzeichnet, dass**
- die Gasleiteinrichtung gaslanzenförmig ist und in den Gassack hineinragt,
- in der Gaslanze sowohl zumindest eine Abströmöffnung (70) als auch zumindest eine zusätzliche Gasauftrittsöffnung (80, 80') vorhanden sind und
- die zumindest eine zusätzliche Gasaustrittsöffnung (80,80') derart angebracht ist; dass im Brandfalle die Schubwirkung des aus der zumindest einen zusätzlichen Gasaustrittsöffnung (80,80') austretenden Gases die Schubwirkung des aus der zumindest einen Abströmöffnung (70) austretenden Gases zumindest näherungsweise neutralisiert.

2. Airbagmodul nach Anspruch 1, **dadurch gekennzeichnet, dass** die Gasleiteinrichtung (30) beim äußeren Erhitzen, insbesondere im Brandfall, abschnittsweise oder vollständig aufschmilzt.

3. Airbagmodul nach Anspruch 2, **dadurch gekennzeichnet, dass** die zumindest eine zusätzliche Gasaustrittsöffnung (80, 80') im Normalbetrieb verschlossen ist und beim äußeren Erhitzen, insbesondere im Brandfall, aufschmilzt und Gas des Gasgenerators (20) zusätzlich ausströmen lässt.

4. Airbagmodul nach Anspruch 3, **dadurch gekennzeichnet, dass** die zumindest eine zusätzliche Gasaustrittsöffnung (80,80') eine Gasausströmrichtung (100) aufweist, die zu der Gasausströmrichtung (110) der zumindest einen Abströmöffnung (70) entgegengesetzt ist.

5. Airbagmodul nach einem der voranstehenden Ansprüche 2 bis 4, **dadurch gekennzeichnet, dass** die zumindest eine zusätzliche Gasaustrittsöffnung (80, 80') im Normalbetrieb durch einen thermisch instabilen Schlauch, der bei einem äußeren Erhitzen, insbesondere im Brandfall, aufschmilzt, verschlossen ist.

6. Airbagmodul nach Anspruch 5, **dadurch gekennzeichnet, dass** der Schlauch durch mindestens eine Schelle (410) gehalten wird.

7. Airbagmodul nach Anspruch 5 oder 6, **dadurch gekennzeichnet, dass** der Schlauch durch einen Schrumpfschlauch (400) gebildet ist.

8. Airbagmodul nach Anspruch 7, **dadurch gekennzeichnet, dass** der Schrumpfschlauch auf die zumindest eine zusätzliche Gasaustrittsöffnung (80) der Gasleiteinrichtung (30) aufgeschrumpft ist und diese verschließt und dass der Schrumpfschlauch bei einem äußeren Erhitzen, insbesondere im Brandfall, aufschmilzt und das Gas des Gasgenerators (20) zusätzlich ausströmen lässt.

9. Airbagmodul nach einem der voranstehenden Ansprüche, **dadurch gekennzeichnet, dass** der Gasgenerator (20) schubneutral ausgestaltet ist.

## Claims

1. Airbag module (10) with a gas generator (20), an airbag (40) and a gas-conducting device (30) connecting the airbag (40) and the gas generator, the gas-conducting device (30) having at least one outflow opening (70) through which the gas of the gas generator (20) is conducted into the airbag (40), wherein the airbag module (10) is configured in such a manner that, in the event of undesired triggering of the gas generator (20) because of external heating, in particular in the event of a fire, the airbag module behaves in a thrust-neutral manner, or at least approximately in a thrust-neutral manner,
**characterized in that**
- the gas-conducting device is in the form of a gas lance and projects into the airbag,
- there is at least one outflow opening (70) and also at least one additional gas outlet opening (80, 80') in the gas lance, and
- the at least one additonal gas outlet opening (80, 80') is arranged in such a manner that, in the event of a fire, the thrust action of the gas emerging from the at least one additional gas outlet opening (80, 80') at least approximately neutralizes the thrust action of the gas emerging from the at least one outflow opening (70).

2. Airbag module according to Claim 1, **characterized in that**, during external heating, in particular in the event of a fire, the gas-conducting device (30) partially or completely melts open.

3. Airbag module according to Claim 2, **characterized in that** the at least one additional gas outlet opening (80, 80') which is closed during normal operation and, during external heating, in particular in the event of a fire, melts open and additionally allows gas of the gas generator (20) to discharge.

4. Airbag module according to Claim 3, **characterized in that** the at least one additional gas outlet opening (80, 80') has a gas discharging direction (100) which is opposed to the gas discharging direction (110) of the at least one outflow opening (70).

5. Airbag module according to one of the preceding Claims 2 to 4, **characterized in that** the at least one additional gas outlet opening (80, 80') is closed during normal operation by a thermally unstable tube, which, during external heating, in particular in the event of a fire, melts open.

6. Airbag module according to Claim 5, **characterized in that** the tube is held by at least one clip (410).

7. Airbag module according to Claim 5 or 6, **characterized in that** the tube is formed by a heat-shrinking tube (400).

8. Airbag module according to Claim 7, **characterized in that** the heat-shrinking tube is shrunk onto the at least one additional gas outlet opening (80) of the gas-conducting device (30) and closes said opening, and **in that**, during external heating, in particular in the event of a fire, the heat-shrinking tube melts open and additionally allows the gas of the gas generator (20) to discharge.

9. Airbag module according to one of the preceding claims, **characterized in that** the gas generator (20) is configured in a thrust-neutral manner.

## Revendications

1. Module d'airbag (10) avec un générateur de gaz (20), un sac de gaz (40) et un dispositif de guidage de gaz (30) connectant le sac de gaz (40) et le générateur de gaz (20), le dispositif de guidage de gaz (30) présentant au moins une ouverture d'écoulement (70), par laquelle le gaz du générateur de gaz (20) est guidé dans le sac de gaz (40), le module d'airbag (10) étant conçu de telle sorte que, dans le cas d'un déclenchement indésirable du générateur de gaz (20) par un réchauffement extérieur, en particulier dans le cas d'un incendie, il retient de façon neutre à la poussée, au moins de façon approximativement neutre à la poussée,
**caractérisé en ce que**
- le dispositif de guidage de gaz est en forme de lance de gaz et fait saillie à l'intérieur du sac de gaz,
- dans la lance de gaz, sont prévues au moins une ouverture d'écoulement (70) ainsi qu'au moins une ouverture de sortie de gaz supplémentaire (80, 80') et
- la au moins une ouverture de sortie de gaz supplémentaire (80, 80') est employée de telle sorte qu'en cas d'incendie, l'effet de poussée du gaz sortant d'au moins une ouverture de sortie de gaz supplémentaire (80, 80') neutralise l'effet de poussée du gaz sortant de la au moins une ouverture d'écoulement (70) et ce, au moins de façon approximative.

2. Module d'airbag selon la revendication 1, **caractérisé en ce que** le dispositif de guidage de gaz (30), en cas de réchauffement extérieur, en particulier en cas d'incendie, entre en fusion par section ou de façon complète.

3. Module d'airbag selon la revendication 2, **caractérisé en ce que** la au moins une ouverture de sortie de gaz supplémentaire (80, 80') est fermée en service normal et, en cas de réchauffement extérieur, en particulier en cas d'incendie, entre en fusion et laisse encore s'écouler le gaz du générateur de gaz (20).

4. Module d'airbag selon la revendication 3, **caractérisé en ce que** la au moins une ouverture de sortie de gaz supplémentaire (80, 80') présente une direction d'écoulement de gaz (100) qui est opposée à la direction d'écoulement de gaz (110) de la au moins une ouverture d'écoulement (70).

5. Module d'airbag selon l'une des revendications précédentes 2 à 4, **caractérisé en ce que** la au moins une ouverture de sortie de gaz supplémentaire (80, 80') est fermée en service normal par un tuyau non stable thermiquement et qui, en cas de réchauffement extérieur, en particulier en cas d'incendie, entre en fusion.

6. Module d'airbag selon la revendication 5, **caractérisé en ce que** le tuyau est maintenu par au moins un collier (410).

7. Module d'airbag selon la revendication 5 ou 6, **caractérisé en ce que** le tuyau est formé par un tuyau rétractable (400).

8. Module d'airbag selon la revendication 7, **caractérisé en ce que** le tuyau rétractable est rétréci sur la au moins une ouverture de sortie de gaz supplémentaire (80) du dispositif de guidage de gaz (30) et ferme celui-ci, et **en ce que** le tuyau rétractable, dans le cas d'un réchauffement extérieur, en particulier en cas d'incendie, entre en fusion et laisse encore s'écouler le gaz du générateur de gaz (20).

9. Module d'airbag selon l'une des revendications précédentes, **caractérisé en ce que** le générateur de gaz (20) est conçu de façon neutre à la poussée.
